# EUROPÄISCHE PATENTSCHRIFT

(11) **EP 3 569 054 B1**
(45) Veröffentlichungstag und Bekanntmachung des Hinweises auf die Patenterteilung: **10.03.2021**
(21) Anmeldenummer: 19174875.5
(22) Anmeldetag: 16.05.2019
(51) Int. Cl.: A01D 87/12

(54) **GREIFER, ARBEITSGERÄT UND VERFAHREN**
GRIPPER, TOOL AND METHOD
DISPOSITIF DE PRÉHENSION, APPAREIL ET PROCÉDÉ

(30) Priorität: 18.05.2018 DE 102018207879
(43) Veröffentlichungstag der Anmeldung: 20.11.2019
(73) Patentinhaber: Deere & Company, Moline, IL 61265 (US)
(72) Erfinder: Guiet, Lionel, 68163 Mannheim (DE)
(74) Vertreter: Stein, Stefan

(56) Entgegenhaltungen:
- WO-A2-00/40072
- WO-A2-2011/070037
- FR-A1- 2 883 450
- FR-A1- 3 010 278

## Beschreibung

Die vorliegende Erfindung betrifft einen Greifer für ein Arbeitsgerät zur Handhabung von Ballen, ein Arbeitsgerät zur Handhabung von Ballen mit einem Aufnehmer und ein Verfahren zur Handhabung eines insbesondere rundzylindrischen Ballens mittels eines Arbeitsgeräts.

Bekannte Arbeitsgeräte zur Handhabung von Ballen finden Verwendung, um Ballen aufzunehmen, umzusetzen und/oder zu transportieren und werden an industriellen und/oder landwirtschaftlichen Fahrzeugen, wie beispielsweise an Traktoren, Ladern, Baggern etc. eingesetzt. Bei derartigen Ballen handelt es sich beispielsweise um industrielle Ballen, z.B. aus Materialien wie Textilien, Müll etc., insbesondere aber um landwirtschaftliche Ballen aus Heu, Stroh, Silage oder einem anderen Erntegut. Derartige Ballen werden beispielsweise auf dem Feld aufgenommen und direkt zu einer Lagerstelle gebracht oder auf ein entsprechendes Transportfahrzeug geladen. Um das Erntegut zu nutzen, beispielsweise, um es an einen Tierbestand zu verfüttern, um es als Einstreu zu verwenden oder um es in anderer Art und Weise zu verwerten, wird der Ballen gegebenenfalls erneut transportiert und/oder umgesetzt. Darüber hinaus muss der Ballen häufig von einem ihn umhüllenden oder umschließenden Hüllmaterial befreit werden, bei dem es sich beispielsweise um Netz, Folie oder auch um Garn handeln kann. Dies kann ein zusätzliches Werkzeug und/oder einen weiteren Arbeitsschritt erforderlich machen, was aufwendig und zeitintensiv ist. Um dies zu vermeiden, wird teilweise versucht, Ballen mit Hilfe eines Ballenschneiders zu transportieren, was viel Fingerspitzengefühl erfordert und zu einem ungewollten Auftrennen des Ballens zur Unzeit führen kann. Die WO 2011/070037 A1 offenbart einen Greifer für einen Frontlader zur Handhabung von Ballen. Der Greifer weist eine selektiv bewegliche Schneideinrichtung und wenigstens einen Tragarm auf, auf den bezogen die Schneideinrichtung verschwenkbar vorgesehen ist. Der Tragarm weist wenigstens einen Zinken und/oder einen Querträger mit wenigstens einem Zinken auf.

Die WO00/40072 zeigt einen Greifer mit den Merkmalen des Oberbegriffs des Anspruchs 1, der bewegbar an einem Aufnehmer von Ballen angeordnet ist. Die der Erfindung zugrunde liegende Aufgabe wird daher darin gesehen, einen Greifer, ein Arbeitsgerät und ein Verfahren vorzusehen, durch welche die vorgenannten Nachteile überwunden werden.

Die Aufgabe wird erfindungsgemäß durch die Lehre der Patentansprüche 1, 7 bzw. 10 gelöst. Weitere vorteilhafte Ausgestaltungen und Weiterbildungen der Erfindung gehen aus den Unteransprüchen hervor.

Diesbezüglich weist ein Greifer für ein Arbeitsgerät zur Handhabung von Ballen eine selektiv bewegliche Schneideinrichtung auf. Darüber hinaus weist der Greifer einen Tragarm auf. An dem Tragarm ist wenigstens eine Zinke und/oder ein Querträger mit wenigstens einer Zinke vorgesehen, welche gegebenenfalls an dem Ballen an bzw. in diesen eingreifen kann. Die Schneideinrichtung ist vorzugsweise zumindest im Wesentlichen entlang der Zinken bewegbar vorgesehen, so dass sie den Ballen entlang der Zinken durchtrennen kann.

Auf diese Weise kann erreicht werden, dass die Schneideinrichtung nur dann mit einem Ballen zusammenwirkt, wenn der Ballen bzw. ein Hüllmaterial des Ballens durchtrennt werden soll. Ein Ballen kann zur Handhabung bzw. zum Transport durch den Greifer ergriffen werden, ohne dass die Schneideinrichtung auf den Ballen bzw. das Hüllmaterial einwirkt. Das Hüllmaterial wird nicht durchtrennt und der Ballen kann formstabil transportiert werden. Um den Ballen bzw. das Hüllmaterial zu durchtrennen, kann die Schneideinrichtung selektiv an den Ballen herangeführt werden. Es ist denkbar, ein Arbeitsgerät werksseitig oder auch nachträglich mit einem derartigen Greifer auszurüsten, es umzurüsten oder einen Greifer als ein Wechselwerkzeug vorzusehen.

Es ist denkbar, dass der Tragarm direkt an einem Ballen angreifen kann, um diesen beispielsweise zu stabilisieren und/oder zu fixieren. Die Schneideinrichtung ist insbesondere bis in einen Endbereich der Zinken bewegbar vorgesehen, so dass sie den Ballen bis hin zu dem Endbereich der Zinken durchtrennen kann.

Der Greifer kann wenigstens einen Tragarm aufweisen, an dem die Schneideinrichtung insbesondere gelenkig aufgenommen und/oder bezogen auf den die Schneideinrichtung verschwenkbar vorgesehen ist. Es können aber auch zwei oder mehr Tragarme vorgesehen sein.

Zur Bewegung der Schneideinrichtung kann ein Schneidenschwenkmotor vorgesehen sein, der vorzugsweise einenends an dem Tragarm und/oder andernends an einem Schneidentragarm der Schneideinrichtung angreift. Der Schneidenschwenkmotor kann als Elektromotor oder in jeder anderen geeigneten Art und Weise ausgebildet sein. Besonders günstig ist es aber, wenn der Schneidenschwenkmotor als ein insbesondere doppeltwirkender Hydraulikmotor ausgebildet ist, welcher einen Hydraulikzylinder und einen Hydraulikkolben aufweist. Ein derartiger Schwenkmotor kann manuell und/oder automatisch betätigbar vorgesehen sein und wird vorzugsweise durch eine an einem Arbeitsfahrzeug vorgesehene Hydraulikdruckquelle in der Art einer Pumpe mit einem Hydraulikmedium versorgt bzw. mit Druck beaufschlagt.

Vorteilhaft ist es, wenn ein Schwenkhebel vorgesehen ist, der einenends gelenkig an dem Tragarm und andernends gelenkig an dem Schneidentragarm vorgesehen ist. Auf diese Weise kann beispielsweise eine Bewegung des Tragarms mit Bezug auf den Schneidentragarm ausgeglichen werden, wie sie beispielsweise bei einem Verschwenken um unterschiedliche Schwenkpunkte auftreten kann.

Besonders günstig ist es, wenn die Schneideinrichtung in einer Führung in dem Tragarm, insbesondere verschieblich, aufgenommen wird. Diese Aufnahme kann direkt an dem Tragarm erfolgen. Vorzugsweise wird die Schneideinrichtung in der Führung aber über den Schneidentragarm bzw. in einer Führung in dem Schneidentragarm aufgenommen.

Ein Arbeitsgerät zur Handhabung von Ballen mit wenigstens einem Aufnehmer kann einen'zuvor beschriebenen Greifer aufweisen, welcher mit Bezug auf den Aufnehmer bewegbar vorgesehen ist. Das Arbeitsgerät ist insbesondere in der Art eines Anbaugeräts ausgebildet oder bildet einen Bestandteil eines derartigen Anbaugeräts. Es ist denkbar, das Arbeitsgerät werksseitig oder auch nachträglich mit einem Greifer auszurüsten, es umzurüsten oder einen Greifer als ein Wechselwerkzeug vorzusehen. Das Arbeitsgerät ist vorzugsweise geeignet zur Verwendung an einem industriellen oder insbesondere landwirtschaftlichen Fahrzeug. Bei dem Fahrzeug kann es sich beispielsweise um einen Traktor, einen Lader, einen Teleskoplader oder ein ähnliches Arbeitsfahrzeug handeln. Der Aufnehmer kann in der Art eines oder mehrerer Zinken, einer Gabel, oder in anderer geeigneter Weise ausgeführt sein. Insbesondere ist er aber in der Art einer Schaufel ausgebildet.

Der Greifer kann mit Bezug auf den Aufnehmer verschiebbar oder in anderer Art und Weise beweglich sein. Besonders günstig ist es aber, wenn der Greifer verschwenkbar vorgesehen ist.

Die Schneideinrichtung und/oder der Greifer bzw. eine Bewegung derselben kann manuell und/oder automatisch gesteuert werden. Vorzugsweise ist ein Mittel zur selektiven Bewegung des Greifers mit Bezug auf den Aufnehmer vorgesehen. Bei dem Mittel kann es sich beispielsweise um eine manuelle Einrichtung handeln. Vorzugsweise ist aber ein Schwenkmotor, insbesondere in der Art eines Hydraulikmotors mit einem Hydraulikzylinder und einem Kolben vorgesehen, der vorzugsweise von einer an dem Fahrzeug vorgesehenen Druckquelle, insbesondere einer Pumpe mit Hydraulikdruck versorgt wird. Der Schwenkmotor und/oder der Schneidenschwenkmotor kann/können beispielsweise direkt angesteuert werden, insbesondere wird er aber über eine vorzugsweise an dem Fahrzeug vorgesehene Steuereinrichtung, beispielsweise in der Art eines Joysticks bedient. Auch eine (teil-) automatisierte Steuer- und/oder Regelung ist denkbar.

Gemäß einem Verfahren zur Handhabung eines insbesondere rundzylindrischen Ballens mittels eines derartigen Arbeitsgeräts eilt die Schneideinrichtung einer Bewegung des Greifers, insbesondere zeitlich versetzt, nach, wenn der Greifer sich auf einen Ballen zu bewegt. Auf diese Weise kann erst der Greifer an dem Ballen bzw. die Zinke(n) in den Ballen eingreifen, um diesen zu stabilisieren und/oder zu fixieren. Erst im Nachgang wird dann die Schneideinrichtung an den Ballen herangeführt, um diesen bzw. ein den Ballen umhüllendes Hüllmaterial zu durchtrennen. So kann der Ballen beispielsweise mittels des Arbeitsgeräts transportiert werden, ohne dass die Schneideinrichtung auf den Ballen bzw. das Hüllmaterial einwirkt bzw. in diesen/s eingreift. Der Greifer kann auch zusätzlich oder alternativ durch die voreilenden Zinken dazu beitragen, den Ballen während eines Durchtrennens zu stabilisieren bzw. zu fixieren.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: ein landwirtschaftliches Arbeitsfahrzeug mit einem Arbeitsgerät zur Handhabung von Ballen mit einem Aufnehmer und einem Greifer,
- Fig. 2: das Arbeitsgerät aus Figur 1 in einer perspektivischen Darstellung,
- Fig. 3: eine Seitenansicht des Arbeitsgeräts,
- Fig. 4a-f: das Arbeitsgerät in einer perspektivischen Darstellung mit einem Ballen, wobei der Greifer in unterschiedlichen Stellungen dargestellt wird und
- Fig. 5a-b: zwei alternative Ausgestaltungen eines Hydraulikkreises für ein derartiges Arbeitsgerät.

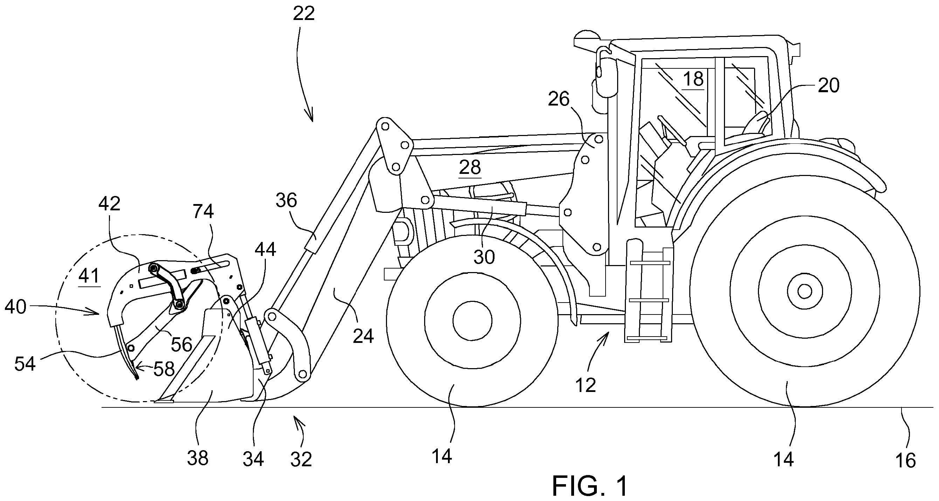

In der Figur 1 der Zeichnung wird ein landwirtschaftliches Arbeitsfahrzeug 10 in der Art eines Traktors schematisch dargestellt. Das Arbeitsfahrzeug 10 ist selbstfahrend ausgebildet und weist einen Rahmen 12 auf, welcher sich über Räder 14 auf dem Untergrund 16 abstützt. Darüber hinaus weist das Arbeitsfahrzeug 10 eine Kabine 18 mit einem Bedienersitz 20 für eine Bedienungsperson auf.

An dem Arbeitsfahrzeug ist eine Ladereinrichtung 22 in der Art eines Frontladers vorgesehen. Die Ladereinrichtung 22 umfasst eine beidseitig an die Seiten des Arbeitsfahrzeugs 10 anbaubare Laderschwinge 24, wobei die Laderschwinge 24 gemäß dem gezeigten Ausführungsbeispiel mittels einer mit dem Rahmen 12 verbundenen Anbaukonsole 26 an das Arbeitsfahrzeug 10 ankoppelbar ist.

Die Laderschwinge 24 umfasst beidseitig des Arbeitsfahrzeugs 10 parallel verlaufende Träger 28, die über eine nicht gezeigte Querstrebe miteinander verbunden sind, und ist über hydraulische Hubzylinder 30, die sich ebenfalls beidseitig des Arbeitsfahrzeugs 10 erstrecken, verschwenkbar. An einem freien Ende 32 der Laderschwinge 24 wird ein Arbeitsgerät 34 mittels eines hydraulischen Schwenkzylinder 36 schwenkbar aufgenommen.

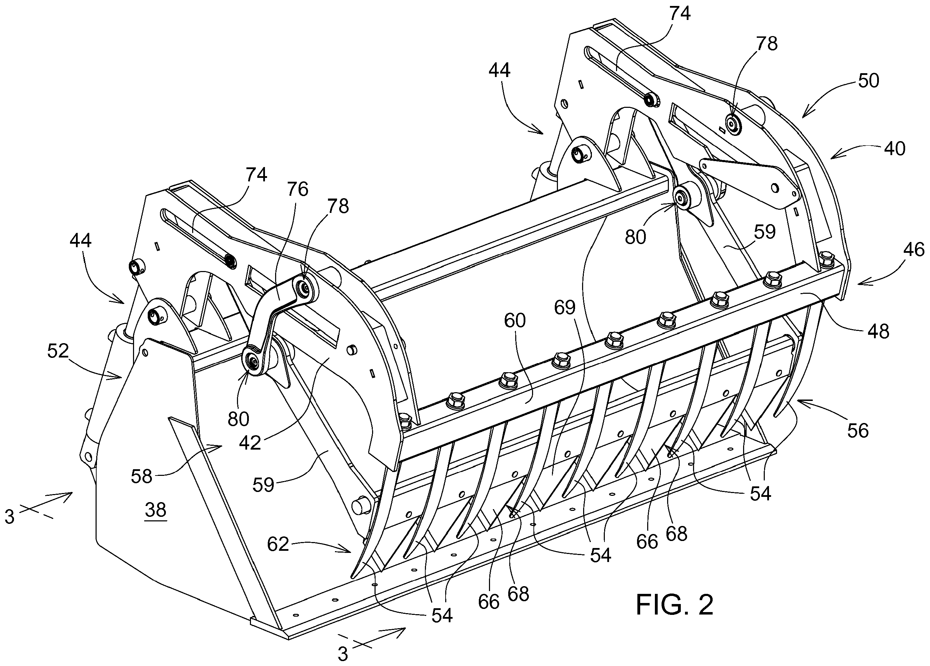

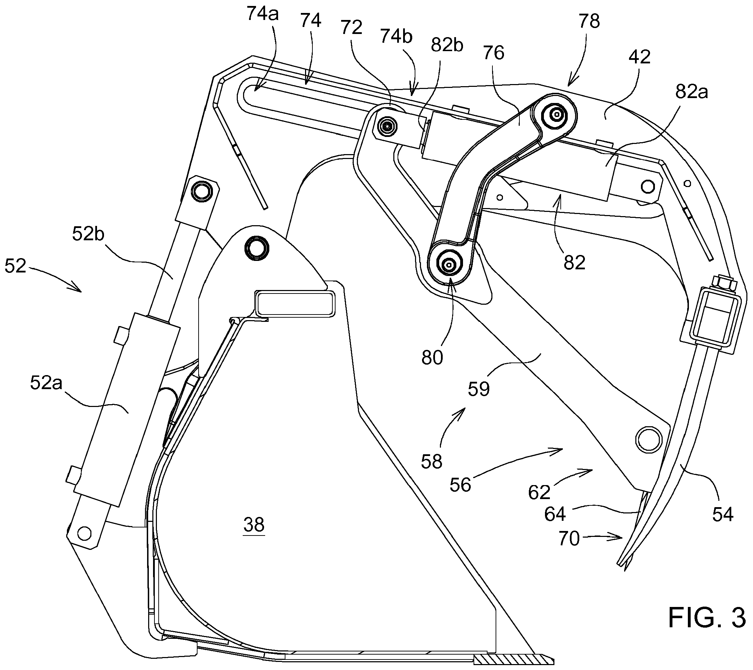

Im Folgenden wird nun auch auf die Figur 2 der Zeichnung, in der das Arbeitsgerät 34 alleine in einer perspektivischen Darstellung gezeigt wird, und auf die Figur 3 Bezug genommen. Das Arbeitsgerät 34 weist einen Aufnehmer 38 und einen Greifer 40 auf. Der Aufnehmer 38 ist in der Art einer Schaufel ausgebildet, die geeignet ist, einen Ballen 41, insbesondere einen rundzylindrischen, landwirtschaftlichen Pressballen bestehend aus Erntegut aufzunehmen, um diesen zu handhaben und/oder zu transportieren. Mittels des Aufnehmers 38 kann aber auch anderes Material, wie z.B. Schüttgut, Erntegut, Erde etc. oder auch Ballen anderer Form, wie beispielsweise Quaderballen, oder industrielle Ballen aufgenommen und/oder gehandhabt werden.

Der Greifer 40 weist zwei Tragarme 42 auf, welche rechts- und linksseitig über jeweils ein Gelenk 44 schwenkbar mit dem Aufnehmer 38 verbunden sind. In einem dem Arbeitsfahrzeug 10 abgewandten Bereich 46 sind die Tragarme 42 über einen Querträger 48 derart verbunden, dass sie mit diesem einen Schwenkrahmen 50 bilden. Darüber hinaus ist ein Schwenkmotor 52 vorgesehen, der über ein in der Kabine 18 des Arbeitsfahrzeugs 10 vorgesehenes Steuermittel (nicht gezeigt), beispielsweise einen Joystick, angesteuert werden kann, so dass der Greifer 40 bzw. der Schwenkrahmen 50 bewegt bzw. verschwenkt werden kann. Der Schwenkmotor 52 kann beispielsweise als ein einen Hydraulikzylinder 52a und einen - kolben 52b aufweisender doppeltwirkender Hydraulikmotor ausgebildet sein, der von dem Arbeitsfahrzeug 10 mit Hydraulikdruck versorgt werden kann.

An dem Querträger 48 sind mehrere, in etwa gleichmäßig beabstandete Zinken 54 vorgesehen, welche sich in etwa senkrecht von dem Querträger 48 in Richtung des Aufnehmers 38 weg erstrecken und die in einem dem Querträger 48 abgewandten Endbereich 56 spitz auslaufen. Gemäß dem vorliegenden Ausführungsbeispiel sind die Zinken 54, 54a an dem Querträger 48 lösbar befestigt, insbesondere verschraubt, und etwa gleichmäßig beabstandet. Es sind auch andere Anordnungen denkbar, so können die Zinken 54 beispielsweise ungleichmäßig beabstandet oder auch gruppiert angeordnet sein.

Darüber hinaus ist eine Schneideinrichtung 58 vorgesehen, welche einen links- und einen rechtseitigen Schneidentragarm 59 aufweist, welche in dem Bereich 46 über einen Querträger 60 verbunden sind. An dem Querträger 60 wird eine Schneidleiste 62, die eine Mehrzahl von zahnartigen Messern 64 aufweist, aufgenommen. Die Messer 64 sind jeweils in der Art im Wesentlichen gleichschenkliger Dreiecke ausgebildet und weisen zwei als Schneidkanten 66 ausgebildete Schenkel 68 auf, welche sich in einer dem Querträger 60 abgewandten Spitze 70 treffen.

Die Schneidentragarme 59 sind jeweils in einem der Schneidleiste 62 abgewandten Endbereich 72 in einer vorzugsweise in der Art eines Langlochs ausgeführten Führung 74 mit einem ersten dem Arbeitsfahrzeug 10 zugewandten Endbereich 74a und einem im Einsatz dem Ballen 41 zugewandten Endbereich 74b an dem jeweiligen der Tragarme 42 verschieblich gelagert. Darüber hinaus ist jeweils ein Schwenkhebel 76 vorgesehen, welcher einenends über ein erstes Drehgelenk 78 mit einem der Tragarme 42 und andernends über ein zweites Drehgelenk 80 mit einem der Schneidentragarme 59 gelenkig verbunden ist, so dass sich über den Schwenkhebel 76 und zusammen mit der Führung 74 ein Bewegungsablauf bzw. der Bewegungsverlauf des Schneidentragarms 59 bestimmt. An dem Endbereich 72 des Schneidentragarms 59 greift ein Schneidenschwenkmotor 82 an, der in der Art eines doppeltwirkenden Hydraulikmotors ausgebildet ist, welcher einen Hydraulikzylinder 82a und einen -kolben 82b aufweist, der andernends an dem Tragarm 42 angebracht ist.

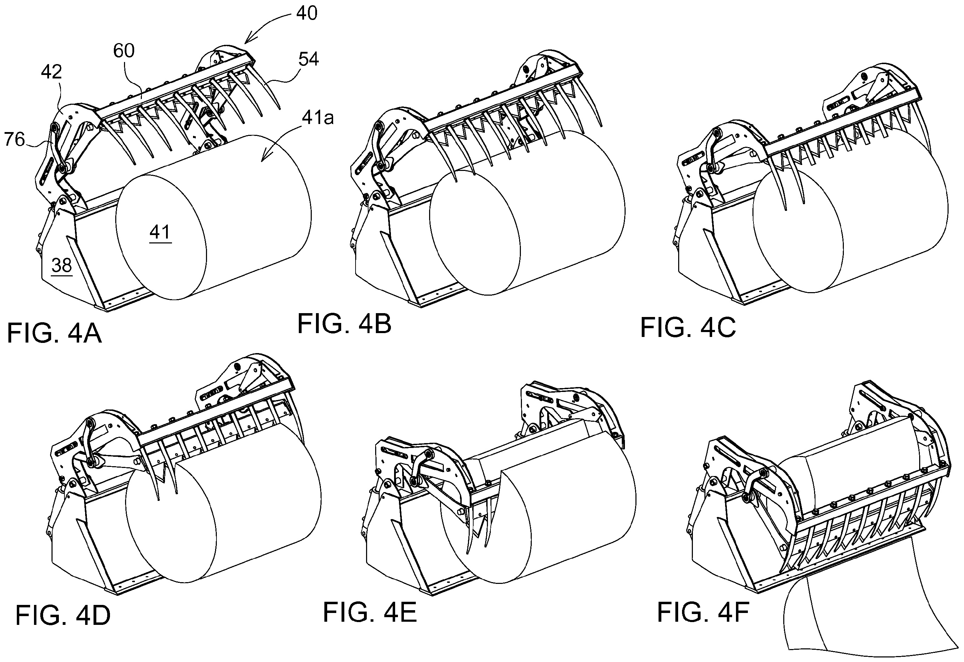

Insbesondere mit Bezug auf die Figuren 4a bis f soll im Folgenden nun näher auf die Funktionsweise des Greifers 40 und insbesondere der Schneideinrichtung 58 näher eingegangen werden. Zur Aufnahme des Ballens 41 wird der Greifer 40 aus seiner in Figur 1 gezeigten Ruhestellung mittels des Schwenkmotors 52 in eine in Figur 4a gezeigte angehobene Stellung gebracht, in der die Zinken 54 bzw. ihre spitzen Endbereiche 56 oberhalb des Ballens 41 angeordnet sind. Der Hydraulikkolben 82b des Schneidenschwenkmotors 82 befindet sich in seiner bezogen auf den Hydraulikzylinder 82a ausgefahrenen Stellung, so dass der Endbereich 72 des Schneidentragarms 59 in dem Endbereich 74a der Führung 74 angeordnet und der Schwenkhebel 76 nach rückwärts oben verschwenkt ist, derart, dass die Messer 64 bzw. die Schneiden 66 hinter bzw. oberhalb des Querträgers 48 angeordnet sind und nicht mit dem Ballen 41 bzw. einem den Ballen 41 umhüllenden Hüllmaterial 41a zusammenwirken.

In einem nächsten Schritt (Fig. 4b) wird der Greifer 40 mittels des Schwenkmotors 52 bzw. durch ein Ausfahren des Hydraulikkolbens 52b mit Bezug auf den Hydraulikmotor 52a in Richtung des Ballens 41 verschwenkt, derart dass die spitzen Endbereiche 56 der Zinken 54 und im Anschluss gemäß der Darstellung in Fig 4c die Zinken 54 vollständig in den Ballen eingreifen. In dieser Stellung kann der Ballen 41 beispielsweise transportiert werden, da die Zinken 54 den Ballen 41 mit Bezug auf den Aufnehmer 38 stabilisieren.

Zum Trennen des Hüllmaterials 41a bzw. zum Schneiden des Ballens 41 wird nun der Schneidenschwenkmotor 82 bzw. sein Hydraulikkolben 82b mit Bezug auf den Hydraulikzylinder 82a eingefahren, so dass sich der Endbereich 72 des Schneidentragarms 59 in der Führung 74 in Richtung des Endbereichs 74b bewegt. Die Messer 64 dringen in den Ballen 41 ein und durchtrennen zuerst ein gegebenenfalls vorhandenes Hüllmaterial 41a und beginnen im Anschluss den Ballen 41 aufzuschneiden bzw. insbesondere hälftig zu teilen (siehe Figur 4d). Schlägt der Endbereich 72 des Schneidentragarms 59 in dem Endbereich 74b der Führung 74 an, so kann der Schneidentragarm 59 und damit die Schneidleiste 62 bzw. die Messer 64 sich mit Bezug auf den Tragarm 42 nicht weiter in Richtung des Ballens 41 bewegen. Die Messer 64 bzw. insbesondere die jeweilige Spitze 70 der Messer 64 grenzt jetzt an die spitzen Endbereich 56 der Zinken 54 an. Der Schneidentragarm 59 verschwenkt nun gemäß der Darstellung in Figur 4e zusammen mit dem Tragarm 42 derart weiter auf den Ballen 41 zu, dass die Zinken 54 weiter in den Ballen 41 eindringen und der Ballen 41 gleichzeitig von den Schneidkanten 66 der Messer 64 durchtrennt wird, bis der Ballen 41 zumindest im Wesentlichen, vorzugsweise hälftig durch trennt ist, wie dies in Figur 4f dargestellt wird. Es kann dabei beispielsweise vorgesehen sein, dass sich die Schneideinrichtung 58 zusammen mit dem Greifer 40 bewegt oder aber auch, dass die Schneideinrichtung 58 erneut der Bewegung des Greifers 40 nacheilt.

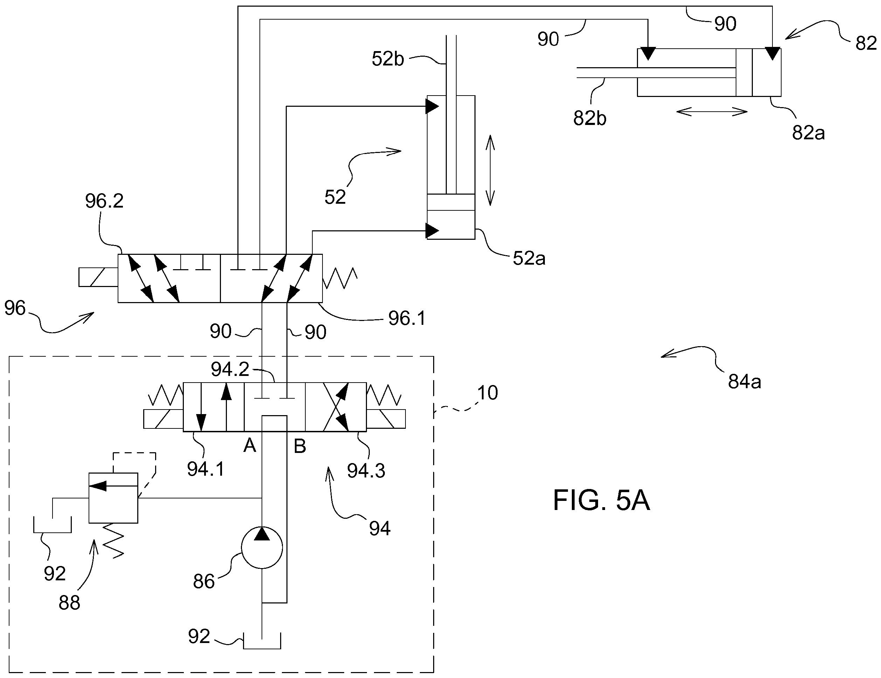

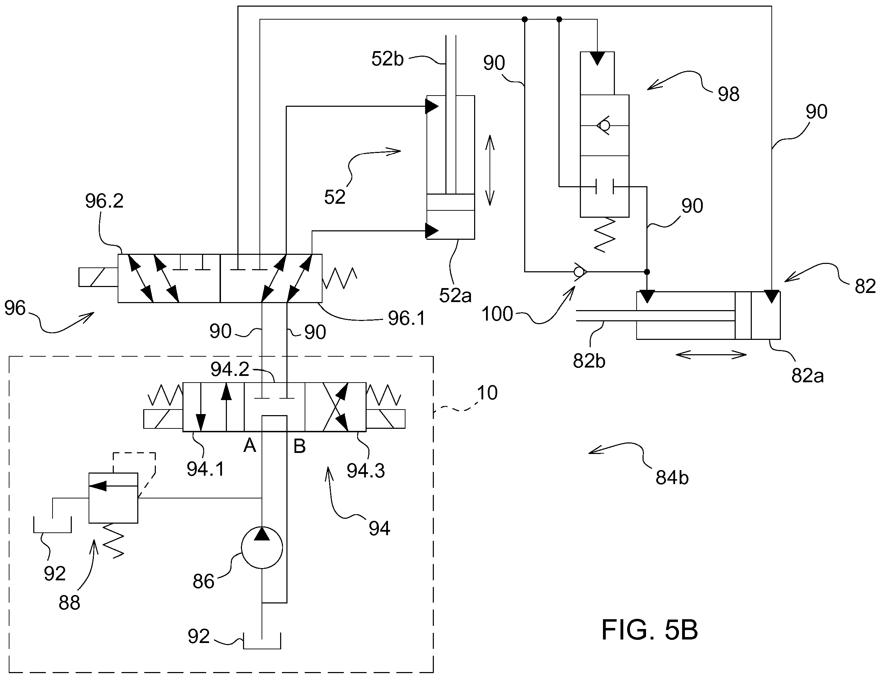

In den Figuren 5a und b werden zwei Hydraulikkreisläufe 84a, b gezeigt, die geeignet sind den Schwenkmotor 52 und den Schneidenschwenkmotor 82 entsprechend des zuvor beschriebenen Verfahrens anzusteuern, wobei entsprechende Bauteile in den Figuren im Folgenden mit den gleichen Bezugszeichen bezeichnet werden.

Gemäß der Darstellung in den Figuren 5a und b wird der Hydraulikkreislauf 84 von einer an dem Arbeitsfahrzeug 10 vorgesehenen Druckquelle 86 mit Druck beaufschlagt, wobei in üblicher Weise ein Überdruckventil 88 vorgesehen ist, über das bei einem einen Grenzdruck übersteigenden Druck in den Leitungen 90 Hydraulikmittel in ein Reservoir 92 abfließen kann. An dem Arbeitsfahrzeug 10 ist darüber hinaus ein Steuerventil 94, das in der Art eines 4/3 Wege Ventils ausgebildet ist und Stellungen 94.1, 94.2 und 94.3 einnehmen kann, vorgesehen, welches Ausgänge A und B aufweist, die entsprechend der jeweiligen Stellung des Steuerventils 94 selektiv mit Druck beaufschlagt werden können. Ist das Arbeitsgerät 34 nicht operativ, so nimmt das Steuerventil 94, seine Neutralstellung 94.2 ein, in der keiner der Anschlüsse A, B mit Druck beaufschlagt wird, einnehmen.

Gemäß dem in Figur 5a gezeigten Ausführungsbeispiel ist dem Steuerventil 94 ein Umschaltventil 96, das in der Art eines 6/2 Wegeventils ausgebildet ist und das Stellungen 96.1 und 96.2 einnehmen kann, nachgeordnet, welches es erlaubt, entsprechend seiner Stellung selektiv entweder den Schwenkmotor 52 oder den Schneidenschwenkmotor 82 mit Druck zu beaufschlagen. Um den die Zinken 54 tragenden Schwenkrahmen 50 nach oben zu verschwenken, nimmt das Steuerventil 94 seine Stellung 94.1 ein, in der der Ausgang A mit Hydraulikdruck beaufschlagt wird. Das Umschaltventil 96 nimmt seine Stellung 96.1 ein. Um den Schwenkrahmen 50 nach unten zu verschwenken, nimmt das Steuerventil 94 seine Stellung 94.3 ein, in der der Ausgang B mit Druck beaufschlagt wird. Soll die die Messer 64 tragende Schneidleiste 62 in Richtung des Ballens 41 verschwenkt werden, so wird das Umschaltventil 96 in seine entsprechende Stellung 96.2 gebracht, während das Steuerventil 94 in seiner Stellung 94.3. verbleibt. Soll die Schneidleiste 62 nach rückwärts, das heißt von dem Ballen 41 weg, gebracht werden, in der die Messer 64 bzw. die Schneiden 66 nicht (länger) in Eingriff mit dem Ballen 41 bzw. einem den Ballen 41 umhüllenden Hüllmaterial 41a sind, so wird das Steuerventil 94 in seine Stellung 94.1 gebracht, während sich das Umschaltventil 96 in seiner Stellung 96.2 befindet. Die Betätigung des Steuerventils 94 und des Umschaltventils 96 kann hier im Wesentlichen durch eine Bedienungsperson über entsprechende, vorzugsweise in der Kabine 18 angeordnete, aber nicht gezeigte Steuerelement, wie beispielsweise einen Joystick und/oder entsprechende Schaltelemente erfolgen. Es ist aber auch eine (semi-)automatische Steuerung, beispielsweise mittels einer ebenfalls nicht dargestellten Regel- bzw. Steuereinrichtung, insbesondere einer Regel- bzw. Steuereinrichtung des Arbeitsfahrzeugs 10 denkbar.

Es wird nun auf die Figur 5b Bezug genommen, in der ein alternativ ausgeführter Hydraulikkreis 84b dargestellt wird. Dieser weist ebenfalls eine Druckquelle 92 auf, welche ein Steuerventil 94 mit Druck beaufschlagt. Dem Steuerventil 94 ist hier allerdings kein Umschaltventil nachgeordnet, vielmehr sind der Schwenkmotor 52 und der Schneidenschwenkmotor 82 parallel geschaltet, wobei dem Schneidenschwenkmotor 82 ein Zuschaltventil 98, in der Art eines Druckfolgerventils und ein Rückschlagventil 100 derart vorgeschaltet sind, dass der Schneidenschwenkmotor 82 einfährt, um die Schneidleiste 62 in Richtung des Ballens 41 zu verschwenken, wenn sich das Steuerventil 94 in seiner Stellung 94.3 befindet, in der es den Schwenkmotor 42 derart mit Druck beaufschlagt, dass dieser den die Zinken 54 tragenden Schwenkrahmen 50 in Richtung des Ballens 41 verschwenkt, und gleichzeitig in den Leitungen 90 ein entsprechender Druck ansteht, der das Zuschaltventil 98 öffnet. Ein derartiger Druck sollte anstehen, wenn die Zinken 54 vollständig in den Ballen 41 eingreifen, so dass die Schneidleiste 62 automatisch betätigt wird, wenn die Zinken 54 den Ballen 41 erfasst haben. Durch die Wirkung der mit Schneidkanten 66 besetzten Messer 64 wird der Ballen 41 bzw. das Hüllmaterial 41a durchtrennt, so dass der auf die Zinken 54 wirkende Gegendruck reduziert wird. Somit wird erneut der Schwenkmotor 52 beaufschlagt, so dass der Greifer 40 weiter in Richtung des Ballens 41 verschwenkt und die Zinken 54 tiefer in den Ballen 51 eindringen, worauf erneut die Schneideinrichtung 58 betätigt wird. Ein derartiger alternierender Ablauf kann den Schneid-/Trennprozess günstig beeinflussen.

## Patentansprüche

1. Greifer (40) für ein Arbeitsgerät (34) zur Handhabung von Ballen (41) mit einem Aufnehmer zum Aufnehmen der Ballen, wobei der Greifer (40) eine selektiv bewegliche Schneideinrichtung (58) aufweist, und der Greifer (40) wenigstens einen Tragarm (42) aufweist, und der Tragarm (42) wenigstens einen Zinken (54) und/oder einen Querträger (60) mit wenigstens einem Zinken (54) aufweist, **dadurch gekennzeichnet, dass** bezogen auf den Tragarm (42), die Schneidvorrichtung (58) verschwenkbar vorgesehen ist und die Schneideinrichtung (58) entlang der Zinken bewegbar vorgesehen ist.

2. Greifer nach Anspruch 1, **dadurch gekennzeichnet, dass** die Schneideinrichtung (58) bis in einen Endbereich (56) der Zinken (54) bewegbar vorgesehen ist.

3. Greifer nach Anspruch 1 oder 2, **dadurch gekennzeichnet, dass** die Schneideinrichtung (58) an dem Tragarm (42) gelenkig aufgenommen ist.

4. Greifer nach einem der vorherigen Ansprüche, **dadurch gekennzeichnet, dass** ein Schneidenschwenkmotor (82) vorgesehen ist, der vorzugsweise einenends an dem Tragarm (42) und/oder andernends an einem Schneidentragarm (59) der Schneideinrichtung (58) angreift.

5. Greifer nach Anspruch 4, **gekennzeichnet durch** einen Schwenkhebel (76), der einenends gelenkig an dem Tragarm (42) und andernends gelenkig an dem Schneidentragarm (59) vorgesehen ist.

6. Greifer nach einem der vorherigen Ansprüche, **dadurch gekennzeichnet, dass** die Schneideinrichtung (58), insbesondere über ihren Schneidentragarm (59), in einer Führung (74) in dem Tragarm (42), vorzugsweise verschieblich aufgenommen wird.

7. Arbeitsgerät (34) zur Handhabung von Ballen (41) mit wenigstens einem Aufnehmer (38) zum Aufnehmen der Ballen, **gekennzeichnet durch** einen Greifer (40) gemäß einem der vorherigen Ansprüche, wobei der Greifer (40) mit Bezug zu dem Aufnehmer (38) bewegbar vorgesehen ist.

8. Arbeitsgerät nach Anspruch 7, **dadurch gekennzeichnet, dass** der Greifer (40) mit Bezug auf den Aufnehmer (38) verschwenkbar vorgesehen ist und/oder Mittel zur selektiven Bewegung des Greifers (40) mit Bezug auf den Aufnehmer (38) vorgesehen sind.

9. Arbeitsgerät nach einem der Ansprüche 7 oder 8, **dadurch gekennzeichnet, dass** die Schneideinrichtung (58) und/oder der Greifer (40) bzw. eine Bewegung derselben manuell und/oder automatisch gesteuert wird/werden.

10. Verfahren zur Handhabung eines insbesondere rundzylindrischen Ballens (41) mittels eines Arbeitsgeräts (34) nach einem der Ansprüche 7 bis 9 **dadurch gekennzeichnet, dass** die Schneideinrichtung (58) einer Bewegung des Greifers (40), insbesondere zeitlich versetzt, nacheilt, wenn der Greifer (40) sich auf einen Ballen (41) zu bewegt.

## Claims

1. Gripper (40) for a working implement (34) for handling bales (41), having a pick-up for picking up the bales, wherein the gripper (40) has a selectively movable cutting device (58), and the gripper (40) has at least one supporting arm (42), and the supporting arm (42) has at least one tine (54) and/or a transverse support (60) having at least one tine (54), **characterized in that** the cutting device (58) is provided so as to be pivotable with respect to the supporting arm (42), and the cutting device (58) is provided so as to be movable along the tines.

2. Gripper according to Claim 1, **characterized in that** the cutting device (58) is provided so as to be movable as far as an end region (56) of the tines (54) .

3. Gripper according to Claim 1 or 2, **characterized in that** the cutting device (58) is held in an articulated manner on the cutting arm (42).

4. Gripper according to one of the preceding claims, **characterized in that** a cutter swivel motor (82) is provided which preferably acts at one end on the supporting arm (42) and/or at the other end on a cutter supporting arm (59) of the cutting device (58) .

5. Gripper according to Claim 4, **characterized by** a swivel lever (76) which is provided at one end in an articulated manner on the supporting arm (42) and at the other end in an articulated manner on the cutter supporting arm (59).

6. Gripper according to one of the preceding claims, **characterized in that** the cutting device (58), is held, preferably displaceably, in particular via its cutter supporting arm (59), in a guide (74) in the supporting arm (42).

7. Working implement (34) for handling bales (41), with at least one pick-up (38) for picking up the bales, **characterized by** a gripper (40) according to one of the preceding claims, wherein the gripper (40) is provided so as to be movable with respect to the pick-up (38).

8. Working implement according to Claim 7, **characterized in that** the gripper (40) is provided so as to be pivotable with respect to the pick-up (38), and/or means for the selective movement of the gripper (40) with respect to the pick-up (38) are provided.

9. Working implement according to either of Claims 7 and 8, **characterized in that** the cutting device (58) and/or the gripper (40) or a movement thereof are/is controlled manually and/or automatically.

10. Method for handling an in particular circular-cylindrical bale (41) by means of a working tool (34) according to one of Claims 7 to 9, **characterized in that** the cutting device (58) lags behind a movement of the gripper (40), in particular with a time delay, when the gripper (40) moves towards a bale (41).

## Revendications

1. Dispositif de préhension (40) pour un engin de travail (34) pour la manipulation de balles (41), comprenant un dispositif de réception pour recevoir les balles, le dispositif de préhension (40) présentant un dispositif de coupe (58) déplaçable de manière sélective et le dispositif de préhension (40) présentant au moins un bras de support (42), et le bras de support (42) présentant au moins une dent (54) et/ou une traverse (60) comprenant au moins une dent (54),
**caractérisé en ce que** le dispositif de coupe (58) est prévu de manière à pouvoir pivoter par rapport au bras de support (42) et le dispositif de coupe (58) est prévu de manière à pouvoir être déplacé le long des dents.

2. Dispositif de préhension selon la revendication 1, **caractérisé en ce que** le dispositif de coupe (58) est prévu de manière à pouvoir être déplacé jusque dans une région d'extrémité (56) des dents (54).

3. Dispositif de préhension selon la revendication 1 ou 2, **caractérisé en ce que** le dispositif de coupe (58) est reçu de manière articulée sur le bras de support (42).

4. Dispositif de préhension selon l'une quelconque des revendications précédentes, **caractérisé en ce qu'**un moteur oscillant de coupe (82) est prévu, lequel vient en prise de préférence à une extrémité avec le bras de support (42) et/ou à l'autre extrémité avec un bras de support de coupe (59) du dispositif de coupe (58).

5. Dispositif de préhension selon la revendication 4, **caractérisé par** un levier pivotant (76) qui est prévu à une extrémité de manière articulée au bras de support (42) et à l'autre extrémité de manière articulée au bras de support de coupe (59).

6. Dispositif de préhension selon l'une quelconque des revendications précédentes, **caractérisé en ce que** le dispositif de coupe (58), en particulier par le biais de son bras de support de coupe (59), est reçu dans un guide (74) dans le bras de support (42), de préférence de manière déplaçable.

7. Engin de travail (34) pour la manipulation de balles (41) comprenant au moins un dispositif de réception (38) pour recevoir les balles,
**caractérisé par** un dispositif de préhension (40) selon l'une quelconque des revendications précédentes, le dispositif de préhension (40) étant prévu de manière à pouvoir être déplacé par rapport au dispositif de réception (38).

8. Engin de travail selon la revendication 7, **caractérisé en ce que** le dispositif de préhension (40) est prévu de manière à pouvoir pivoter par rapport au dispositif de réception (38) et/ou des moyens pour le déplacement sélectif du dispositif de préhension (40) par rapport au dispositif de réception (38) sont prévus.

9. Engin de travail selon l'une quelconque des revendications 7 et 8, **caractérisé en ce que** le dispositif de coupe (58) et/ou le dispositif de préhension (40) ou un déplacement de ceux-ci est/sont commandés manuellement et/ou automatiquement.

10. Procédé de manipulation d'une balle (41), notamment cylindrique ronde, au moyen d'un engin de travail (34) selon l'une quelconque des revendications 7 à 9, **caractérisé en ce que** le dispositif de coupe (58) suit un mouvement du dispositif de préhension (40), en particulier de manière décalée dans le temps, lorsque le dispositif de préhension (40) se déplace vers une balle (41).
